# EUROPEAN PATENT SPECIFICATION

(11) **EP 1 239 731 B1**
(45) Date of publication and mention of the grant of the patent: **27.10.2004**
(21) Application number: 00978990.0
(22) Date of filing: 06.12.2000
(51) Int. Cl.: A01N 43/80

(54) **BACTERICIDAL AND FUNGICIDAL LIQUID PREPARATIONS FOR INDUSTRIAL PRODUCTS**
BAKTERIZIDE UND FUNGIZIDE FLÜSSIGE PRÄPARATE FÜR INDUSTRIELLE PRODUKTE
PREPARATIONS LIQUIDES BACTERICIDES ET FONGICIDES DESTINEES A DES PRODUITS INDUSTRIELS

(30) Priority: 13.12.1999 DE 19961621
(43) Date of publication of application: 18.09.2002
(73) Proprietor: Air Liquide Santé (International), 75341 Paris Cedex 07 (FR); SCHÜLKE & MAYR GMBH, 22851 Norderstedt (DE)
(72) Inventor: BEILFUSS, Wolfgang, 22339 Hamburg (DE); GRADTKE, Ralf, 25436 Tornesch (DE)
(74) Representative: Conan, Philippe Claude
(86) International application number: PCT/IB2000/001823
(87) International publication number: WO 2001/041570

(56) References cited:
- EP-A- 1 084 619
- WO-A-00/67579
- WO-A-99/65316
- DE-A- 2 337 755
- DE-A- 2 524 543
- DE-A- 19 534 532
- GB-A- 2 011 790
- GB-A- 2 274 779

## Description

The present invention relates to compositions for use in industrial products which protect these products against bacterial and fungal attack over relatively long service lives. These compositions are, in particular, themselves stable and comprise at least one bactericidal N-formal, at least one fungicide and at least one stabilizer. The invention further relates to industrial products to which these compositions have been added.

Preservatives with microbicidal action for use in industrial products such as cooling lubricants, cooling lubricants mixed with water, industrial-grade emulsions and other water-based industrial products, but also in household products, such as, for example, cleaning products or cosmetics, such as, for example, bodycare compositions, disinfectants and seed treatment compositions are generally added to the products to be preserved as required in the form of concentrates in a small amount.

These preservatives protect these products against bacterial and fungal attack and contribute to long service lives and long usability and applicability of industrial products, and household and cosmetic products.

During their manufacture, storage and their use, the preservatives are subject to certain requirements which arise, inter alia, from the way in which they are added to said products in the form of concentrates. These concentrates should themselves be sufficiently stable over long service lives.

Known bactericidal active ingredients which are currently frequently used are N-formals which, in addition to the biocidal, in particular bactericidal, action, have a (desired) alkalinizing and buffer action. N-formals are reaction products of aldehydes with amines. These N-formals act as aldehyde donor compounds. In order to achieve microbicidal broadband action, it is, however, necessary to improve the fungicidal action of the N-formal-containing compositions or industrial products. However, incompatibilities are frequently found between N-formals and fungicides, which are evident from the decrease in active ingredient content, resulting in inadequate effectiveness. These problems arise irrespective of whether the components N-formal and fungicide are added to the industrial products simultaneously or separately, i.e. during storage of the preservative and in the product treated therewith.

Ways of improving the stability of compositions which comprise bactericidal N-formals and fungicides have therefore been sought.

DE 197 05 085 A1 describes algicidal and fungicidal preservatives which comprise a pyrithione, an algicidal triazine and a fungicidal derivative of benzimidazole or thiophene.

GB 2 274 779 A describes dilute fungicidal compositions for use in aerosols which consist of an aromatic sulphur-containing compound or a mixture of an aromatic sulphur-containing compound and a triazine. In the comparative examples, the disadvantages of these compositions are compared with the additive mixtures according to the invention.

DE 197 22 858 discloses compositions with bactericidal and fungicidal action, which comprise a formaldehyde donor compound and an iodopropynyl compound and may further comprise isothiazolones or 2-mercaptopyridine N-oxide.

DE 195 34 532 C2 discloses, as stabilizers for isothiazolones, 2-mercaptopyridine N-oxide and corresponding salts and mild oxidizing agents, such as, for example, hydrogen peroxide or t-butyl hydroperoxide.

GB 2 011 790 discloses a germicidal composition comprising 2-methyl-3-oxo-5-chlorothiazoline-1-2, dimethylolurea and an adduct of 2 moles for formaldehyde with a glycol.

DE 25 24 543 discloses a mixture of a watersoluble bactericide and an oil-soluble bactericide for use as a bactericidal additive for metal-working composition, corrosion inhibiting compositions or hydraulic oil.

DE 23 37 755 discloses the combination of a N-formal 2-mercaptopyridin or its salts.

The attempt to formulate ready-to-use preparations according to the prior art have however led to inhomogeneous or unstable solutions, even after short storage times. These inhomogeneities hinder exact dosing of the composition or make it impossible, this being true in particular for N-formal compositions. Although a separate addition of active ingredient and stabilizer is possible, in practice it is not desired and is plant- and labour-intensive, and is susceptible to errors.

On the other hand, in compositions which necessarily prescribe the presence of more than three components as primary active ingredients, the possibility of being able to mix within broad concentration ranges is limited, and the costs are also considerably higher.

Accordingly, the object of the present invention is to make available additive mixtures for cooling lubricant products which comprise N-formals as bactericidal active ingredients and also fungicides, which protect the industrial products from microbial attack and improve the shelf life and service life of the industrial products. The compositions according to the invention should in themselves be sufficiently stable over a long period and be storable and not decompose under practical conditions.

A further object of the present invention is to formulate compositions comprising N-formal and fungicide such that they can be metered easily to commercially available industrial products, e.g. by adding a liquid preparation. It is also the object of the present invention to provide effective industrial products which are characterized in that they have an increased service life and improved effectiveness compared with the prior art.

A further object was to develop compositions which necessarily prescribe the presence of the fewest possible different active ingredient components, the intention being for the long term stability and the high effectiveness to be retained.

These objects are achieved by the characterizing features of Patent Claim 1.

In addition to the customary constituents, the industrial products comprise an additive mixture according to the invention. The additive mixture is added to the industrial products, in particular crop-protection compositions, seed treatment compositions, industrial preservatives, in particular pack preservatives, cooling lubricant additives, fuel additives, disinfectants, in particular low-foam disinfectants, compositions for controlling cut wounds, parasites and plants, compositions for treating plant cut wounds, film preservatives for outside and, in particular, inside, disinfectants in areas where increased fungal attack is to be expected, and wood preservatives, for example in a concentration greater than 0.01% by weight, preferably greater than 0.05% by weight and in particular greater than 0.10% by weight, based on the weight of the industrial product. For example, 0.01 to 10% by weight, preferably 0.05 to 5% by weight and in particular 0.10 to 1% by weight, based on the weight of the industrial product, are added. The components of the composition can be incorporated into the industrial products separately from one another, in particular temporally separately from one another, it being possible for the components of the composition (or the composition) to be incorporated with the controlled introduction of heat.

The N-formals according to the invention are condensation products of aldehydes, preferably formaldehyde (e,g. p-formaldehyde), acetaldehyde or propionaldehyde, in particular formaldehyde and p-formaldehyde, and amines, e.g. primary or secondary amines, preferably alkanolamines and oxazolidines (e.g. monoethanolamine, isopropanolamine, 3-amino-1-propanol, 5-methyloxazolidine). The N-formal is generally present in the additive mixture according to the invention in a concentration of from 1 to 99% by weight, preferably from 10 to 95% by weight, more preferably 20 to 90%.by weight, in particular 40 to 90% by weight, e.g. 50% by weight or 90% by weight.

Particularly preferred N-formals are Grotan™ BK (2,2',2''-(hexahydro-1,3,5-triazine-1,3,5-triyl)triethanol) and Mar™ 71 (3,3'-methylenebis(5-methyloxazolidine)).

The fungicides used in the additive mixture according to the invention are chosen from Kathon™ 893 T (2-n-octyl-2H-isothiazolin-3-one), Kathon™ 893 (45% strength solution of 2-n-octyl-2H-isothiazolin-3-one in 1,2-propylene glycol), benzisothiazolone and mixtures of 5-chloro-2-methyl-4-isothiazolin-3-one and 2-methyl-4-isothiazolin-3-one such as Kathon™ 886 (14% strength aqueous solution of a 5:1 mixture of 5-chloro-2-methyl-4-isothiazolin-3-one and 2-methyl-4-isothiazolin-3-one) or Zonen-Fex (mixture of 10% 5-chloro-2-methyl-4-isothiazolin-3-one, 1% of 2-methyl-4-isothiazolin-3-one, 62.3% of ethylene glycol and 26.7% of ethylene glycol diacetate).

The fungicide is present in the additive mixture according to the invention in a concentration of from 0.1 to 99% by weight, preferably 2 to 40% by weight, in particular 5 to 10% by weight, e.g. 8% by weight.

The stabilizer can likewise have microbicidal action. The stabilizers or stabilizer mixtures in the additive mixture according to the invention are 2-mercaptopyridin N-oxide and corresponding metal and ammonium salts, such as, for example, Pyrion-Na (40% strength aqueous solution of 2-mercaptopyridine N-oxide sodium salt), 2-mercaptopyridine N-oxide metal salt complexes, such as zinc pyrithione (e.g. as 48% strength aqueous dispersion), 2,,2'-dithiobis(pyridine N-oxide) (Pyrion disulphide), 2-mercaptobenzothiazole, 2-(thiocyanomethyl)thiobenzothiazole, NaBrO₃, and mixtures thereof. In particular, Pyrion-Na, zinc pyrithione, Pyrion disulphide, NaBrO₃, and 2-mercaptobenzothiazole are preferred, e.g. also a mixture of Pyrion-Na and NaBrO₃. The stabilizer is present in the additive mixture according to the invention in a concentration of from 0.1 to 40% by weight, preferably 2 to 20% by weight, in particular 5 to 10% by weight, e.g. 8% by weight.

In addition, solvents and/or solubility promoters may be present in the additive mixture according to the invention, e.g. alcohol, ether, glycol, glycol monoether, glycol diether, polyol, polyol monoether, completely or incompletely etherified polyol and/or mixtures thereof, preferably phenoxyethanol, phenoxypropanol, 1,2-propylene glycol, 1-methoxy-2-propanol, diethylene glycol butyl ether and dipropylene glycol. Preferably, liquid additive mixtures with a high active ingredient content (e.g. > 50% by weight, preferably > 65% by weight, in particular > 75% by weight) and, accordingly, a comparatively low solvent/solubility promoter content (e.g. < 50% by weight, preferably < 35% by weight, in particular < 25% by weight) are claimed. The additive mixture can also be in liquid-viscous or paste form.

Preferably, the compositions are anhydrous or at least have a low content of water.

In addition, the composition can comprise complexing agents, e.g. phosphates and polyphosphates, ethylenediaminetetraacetic acid, nitriloacetic acid, N,N-bis(2-hydroxyethyl)glycine, diethylenetriaminepentaacetic acid, hydroxyethanediphosphonic acid, gluconic acid, hydroxyethylethylenediaminetriacetic acid, polyoxycarboxylic acid, tris(aminomethyl)-phosphonic acid, diethylenetriaminepentamethylenephosphonic acid, ethylenediaminetetramethylenephosphonic acid, ethylenediaminedisuccinic acid, ethylenediaminediglutaric acid, iminodisuccinic acid, polyaspartic acid and methylglycinediacetic acid, and corresponding salts of said acids or mixtures of the complexing agents.

Moreover, corrosion-protective agents, preferably phosphonobutanetricarboxylic acid and its salts, derivatives of triazole, e.g. benzotriazole and methylbenzotriazole, Irgamet 42 (2,2'-[[(methyl-1H-benzotriazol-1-yl)methyl]imino]bisethanol), Irgamet 39 (N,N-bis(2-ethy-hexyl)-4-methyl-1H-benzotriazole-1-methylamine), and carboxylic acid derivatives, e.g. DiACID 1550 (5 (or 6)-carboxy-4-hexylcyclohex-2-en-1-octanoic acid), may be present.

Further microbicidal active ingredients, in particular O-formals, additives, in particular phenols, and/or auxiliaries may optionally be added to the additive mixture. However, the additive mixture according to the invention is preferably free from iodopropynyl compound and derivative of benzimidazole or thiophene.

The additive mixtures are prepared by simple mixing, e.g. if the N-formal is initially introduced, the stabilizer (e.g. Pyrion-Na, 40% strength in water or preferably anhydrous) is dissolved with stirring and, where appropriate, the solvents and/or solubility promoters are stirred in to give a homogeneous mixture. The fungicide is then added with stirring. If necessary, slight clouding which occurs can be separated off, e.g. filtered off, e.g. within 4, 10 or 24 hours after mixing.

During the mixing or after the mixing, the concentrates are preferably subjected to a controlled heat treatment which contributes to an improvement in the stability of the additive mixtures. Thus, for example, the mixture can be heated for 5 min to 3 hours at a temperature between 40°C and 100°C, preferably for 10 min to 2 hours at a temperature between 50°C and 90°C, in particular for 20 min to 1.5 hours at a temperature between 65°C and 85°C, e.g. 1 hour at 80°C. Furthermore, the composition can be stored for several months, such as, for example, 3 months, at a temperature of from 20°C to 50°C, in particular 30°C to 40°C.

According to the invention, it has surprisingly been found that
a. N-formal-containing compositions can be long-term stabilized,
b. compositions which comprise N-formal and fungicides can be long-term stabilized merely by adding a single stabilizing component,
c. heat treating the compositions dramatically improves their long-term stability.

The additive mixture is readily dosable, and is also storable and stable under practical conditions, i.e. at 10°C to 40°C, for several months to several years. Also advantageous is the good handlability of the additive mixture, compared with the storage, preparation and metered addition of active ingredients and stabilizers present in two-component systems.

The increased stability of the additive mixtures according to the invention is evident in particular from the lower or negligible tendency for forming sediments and clouding.

The additive mixtures according to the invention can be added in an effective manner to industrial products so that the stability thereof and the service life of the finished industrial products is improved compared with known systems.

The surprising and at times synergistic effect achieved when an additive mixture according to the invention is used in industrial products is illustrated by the examples below.

### Examples

Percentages are given in % by weight.

In the examples below the following references apply:

| N-formal | Mar™ 71 | 3,3'-methylenebis(5-methyloxazolidine) |
|---|---|---|
| | Grotan™ BK | 2,2',2"-(hexahydro-1,3,5-triazine-1,3,5-triyl)triethanol |
| Fungicide | Kathon™ 893 | a 45% strength 2-octyl-2H-isothiazol-3-one solution in 1,2-propylene glycol |
| | Kathon™ 886 | a 14% strength aqueous solution of a 5:1 mixture of 5-chloro-2-methyl-4-isothiazolin-3-one and 2-methyl-4-isothiazolin-3-one |
| Stabilizer | Pyrion-Na | a 40% strength aqueous 2-mercaptopyridine N-oxide sodium salt solution |

### Example 1

### Increase in the stability of a mixture of Grotan™ BK N-formal and Kathon™ 893 fungicide by adding the stabilizer Pyrion-Na

| | A (parts by weight) | B (parts by weight) |
|---|---|---|
| Grotan™ BK anhydrous | 55.65 | 55.65 |
| Kathon™ 893 | 17.0 | 17.0 |
| Na-Pyrion 40% | - | 13.9 |
| Total | 72.65 | 86.55 |

In Example A (prior art), Grotan™ BK (anhydrous) was mixed with Kathon™ 893, giving a solution which, after storage for just 3 days at room temperature, turns cloudy and forms considerable sediment. In Example B (invention), Pyrion-Na was stirred into Grotan™ BK, and then Kathon™ 893 was added. This gives a clear solution which does not form sediment even after storage for 3 months at room temperature.

After preparation and storage at 40°C, solution A is very cloudy with a sediment after just 24 h. In contrast, after preparation and storage at 40°C, solution B is still clear and free from sediment even after 3½ months.

### Result:

An addition of Pyrion-Na stabilizer stabilizes in accordance with the invention a preparation of Grotan™ BK (anhydrous) N-formal and Kathon™ 893 fungicide.

### Example 2

### Better stability of the preparations according to the invention compared with mixtures of N-formal and stabilizer or fungicide and stabilizer

A 89% Mar™ 71 N-formal and 11% Pyrion-Na stabilizer (40% strength in water) were mixed. The immediately yellow, opaque solution is weakly opaque with a voluminous precipitate after storage for 3 weeks at room temperature (prior art).
B 24.5% Kathon™ 893 fungicide, 17.5% Pyrion-Na stabilizer (40% in water) and 58% phenoxypropanols were mixed. The initially clear, yellow-brown solution forms a crystalline precipitate (about 5%) in yellow solution after storage at room temperature after about 4 months (prior art).
C 46.8% Mar™ 71 N-formal, 17.0% Kathon™ 893 fungicide, 13.4% Pyrion-Na stabilizer and 22.8% 1,2-propylene glycol were heated for 1 hour at 80°C. Cooling gives a clear, yellow-brown solution. After storage for 4 months at room temperature, this solution remains clear yellow-brown (invention).

### Result:

The stability of a combination of the N-formal Mar™ 71 and stabilizer (A) is significantly increased according to the invention by the addition of the fungicide Kathon™ 893 (C). In addition, the addition of the N-formal Mar™ 71 (C) increases, in accordance with the invention, the stability of a combination of Kathon™ 893 and the stabilizer Pyrion-Na (B).

### Example 3

### Long-term stability of an additive mixture according to the invention upon storage at elevated temperature

90% Mar™ 71 N-formal were mixed with 10% of a mixture of 24.5% Kathon™ 893 fungicide, 17.5% Pyrion-Na stabilizer (40% strength in water) and 58% phenoxypropanols, which gave a clear, yellow solution. After storage for 24 hours at room temperature, the solution was slightly cloudy and was filtered. Various samples were stored at -5°C and 4°C in clear glass and at 25°C and 40°C in polyethylene over a relatively long period.

### Result:

After 9 weeks, all samples remained clear yellow. After storage for 12 months a slight yellow precipitate in unchanged clear yellow solution, in the case of the 40°C sample significantly less precipitate than in the other samples.

### Example 4

### Further improvement in the stability of the preparations according to the invention by targeted short-term heat treatment

A mixture (sample A) of 46.8% Mar™ 71, 17% Kathon™ 893, 13.4% Pyrion-Na (40% in water) and 22.8% 1,2-propylene glycol was obtained. A second sample (sample B) was mixed as sample A, but heated for 1 hour at 80°C. The samples A and B according to the invention were each stored at room temperature and at 40°C for 3 months.

### Result:

After storage at room temperature or 40°C, sample B has in each case significantly less precipitate than sample A. Short-term (here 1 hour) heating at 80°C has a positive effect on the stability. Furthermore, storage at 40°C leads to a reduction in the slight tendency towards clouding.

### Example 5

### Improvement in the stability by heat treatment depending on the solvent/solubility promoter

The experiments of Example 4 were repeated but using 1-methoxy-2-propanol instead of 1,2-propylene glycol. Samples A and B (preparation according to Example 4) were stored at room temperature or 40°C for 3 months.

### Result:

Samples A and B confirm the result of Example 4 that short-term heat treatment of the preparations and also storage at elevated temperature have a positive effect on the stability (with regard to precipitations). Moreover, in the case of 1,2-propylene glycol (Example 4), the slight tendency towards clouding of the samples is lower compared with the 1-methoxy-2-propanol used in Example 5.

### Example 6

### Particular stability of anhydrous additive mixtures

61% of a mixture, dewatered on a rotary evaporator, of Grotan™ BK N-formal (69.1 parts by weight) and Pyrion-Na stabilizer, 40% strength (13.9 parts by weight) were stirred with 17% Kathon™ 893 fungicide and 22% solvent/solubility promoter at 45°C to give a homogeneous mixture. The solvents/solubility promoters used were phenoxyethanol, phenoxypropanols, 1-methoxy-2-propanol, dipropylene glycol or diethylene glycol butyl ether. In all cases, clear to slightly opaque homogeneous stable preparations were obtained.

### Result:

Grotan™ BK N-formal can be combined with Kathon™ 893 fungicide to give a stable preparation if Pyrion-Na stabilizer is added, water is removed and organic solvents intended therefor are added. Because of their particularly low tendency towards clouding, solutions in diethylene glycol butyl ether (in preference to dipropylene glycol and 1-methoxy-2-propanol) have proven particularly suitable.

### Example 7

### The effectiveness of the additive mixtures according to the invention in the S&M Boko test after incorporation into cooling lubricants

The three test additive mixtures below were prepared:
A 46.8% Mar™ 71, 13.4% Pyrion-Na (40% strength in water), 17% Kathon™ 893 and 22.8% 1,2-propylene glycol were mixed and stored at 40°C for 3 months, then stored at room temperature. The effectiveness of test product A was tested 3 years after preparation.
B Corresponds to test product A except that after mixing the constituents of the additive mixture, the sample was held at 80°C for 1 hour. It was further stored for 3 months at 40°C, then at room temperature. The effectiveness of the test product B was tested 3 years after preparation.
C Corresponds in the composition to test products A and B, except that the batch was held at 80°C for 1 hour and the effectiveness was tested using a test product freshly prepared in this way.

The test products A, B and C were incorporated, in the concentrations given below, into 100 ml in each case of a 4% strength dilute solution of the cooling lubricant Almasol EP or product 287/17-1 obtainable from Castrol in tap water from Norderstedt. The growth control used was an unpreserved sample in each case.

Two days after the incorporation of the preservatives, the test batches were infected for the first time with 1 ml of an inoculation solution. The inoculation solution is a suspension of the microbes (cultivated on nutrient media, then adapted to cooling lubricants diluted with water) and has a titre of at least 10⁷ microbes per ml. The inoculation was carried out with a bacterial suspension (mixed suspension of Escherichia coli, ATCC 11229, Klebsiella pneumoniae, ATCC 4352 and Pseudomonas aeruginosa, ATCC 15442), fungal suspension (Fusarium oxysporum, ATCC 62318) or a mixed suspension of bacteria and fungi.

The test batches were subsequently inoculated twice weekly and streaked out on agar plates twice weekly, the first streaking being carried out immediately after reinoculation. The microbial growth of the streaks is assessed after incubation for three days at 25°C. To be on the safe side, negative streaks were observed for a further two days and reassessed. The preservative action of the individual product concentrations is assessed by reference to the presence or absence of growth of the individual streaks.

| Almasol EP cooling lubricant Castrol mineral oil based, amine-containing | | | | |
|---|---|---|---|---|
| | | Endured inoculation cycle upon inoculation with: | | |
| | Use conc. | Bacterial suspension | Fungal suspension | Mixed suspension |
| | 0 | 2 | 0 | 0 |
| A | 0.20% | >10 | >12 | 9 |
| | 0.15% | 6 | >12 | 8 |
| | 0.10% | 6 | >12 | 8 |
| B | 0.20% | >10 | >12 | 11 |
| | 0.15% | >10 | >12 | 9 |
| | 0.10% | >12 | >12 | 9 |
| C | 0.20% | >12 | >12 | 10 |
| | 0.15% | >12 | >12 | 9 |
| | 0.10% | >11 | >12 | 9 |

| Product 287/17-1 cooling lubricant Castrol synthetic | | | | |
|---|---|---|---|---|
| | | Endured inoculation cycle upon inoculation with: | | |
| | Use conc. | Bacterial suspension | Fungal suspension | Mixed suspension |
| | 0 | 6 | 0 | 0 |
| A | 0.20% | >12 | >12 | 10 |
| | 0.15% | >12 | >12 | 9 |
| | 0.10% | >12 | >12 | 9 |
| B | 0.20% | >12 | >12 | 10 |
| | 0.15% | >12 | >12 | 9 |
| | 0.10% | >11 | >12 | 10 |
| C | 0.20% | >12 | >12 | 10 |
| | 0.15% | >12 | >12 | 10 |
| | 0.10% | >12 | >12 | 10 |

The preserved cooling lubricants show no visible differences compared with the blank in each case (cooling lubricant without active ingredient).

The effectiveness of the preparations stored for 3 years and freshly prepared against bacteria and fungi is excellent. The effectiveness in the synthetic cooling lubricant is somewhat better than in the mineral oil-based cooling lubricant. Furthermore, the results show that controlled heat treatment (here 1 hour at 80°C) significantly improves the bactericidal action of the additive mixtures, and an additive mixture briefly heat-treated in this way shows virtually no loss in action even upon storage at room temperature for many years. In particular, the effectiveness is not impaired as a result of storage at 40°C for three months.

In the case of the use in mineral oil-based cooling lubricants, a comparison of Examples A and B shows the improved bactericidal effectiveness after heating the composition according to the invention at 80°C for just one hour.

## Claims

1. Stable microbicidal composition which comprises
a) at least one bactericidal N-formal,
b) at least one fungicide chosen from 2-octyl-2H-isothiazolin-3-one, benzisothiazolone, or mixtures of 5-chloro-2-methyl-4-isothiazolin-3-one and 2-methyl-4-isothiazolin-3-one and
c) at least one stabilizer chosen from 2-mercaptopyridine N-oxide, alkali-metal or ammonium salts, of 2-mercaptopyridine N-oxide, metal salt complexes of 2-mercaptopyridine N-oxide, 2,2'-dithiobis(pyridine N-oxide), 2-mercaptobenzothiazole, 2-thiocyanomethylthiobenzothiazole, NaBrO₃ and mixtures thereof.

2. Composition of Claim 1 wherein the stabilizer is chosen from 2-mercaptopyridine N-oxide sodium salt and 2-mercaptopyridine N-oxide zinc salt

3. Composition according to Claim 1 or 2, **characterized in that** the bactericidal N-formal is a condensation product of formaldehyde and amines, preferably alkanolamines.

4. Composition according to one of Claims 1 to 3, **characterized in that** the bactericidal N-formal is chosen from 3,3'-methylenebis(5-methyloxazolidine) and 2,2',2''-(hexahydro-1,3,5-triazine-1,3,5-triyl)triethanol.

5. Composition according to one of Claims 1 to 4, **characterized in that** the N-formal is present in a concentration of from 1 to 99% by weight, preferably from 10 to 95% by weight, more preferably 20 to 90% by weight, in particular 40 to 90% by weight.

6. Composition according to one of Claims 1 to 5, **characterized in that** the fungicide is an isothiazolone derivative.

7. Composition according to one of Claims 1 to 6, **characterized in that** the fungicide is present in a concentration of from 0.1 to 99% by weight, preferably 2 to 40% by weight, in particular 5 to 10% by weight.

8. Composition according to one of Claims 1 to 7, **characterized in that** the stabilizer also has microbicidal action.

9. Composition according to one of Claims 1 to 8, **characterized in that** the stabilizer is present in a concentration of from 0.1 to 40% by weight, preferably 2 to 20% by weight, in particular 5 to 10% by weight.

10. Composition according to one of Claims 1 to 9, **characterized in that** it further comprises solvents and/or solubility promoters.

11. Composition according to Claim 9, **characterized in that** the solvent comprises alcohol, ether, glycol, glycol monoether, glycol diether, polyol, polyol monoether, completely or incompletely etherified polyol and/or mixtures thereof.

12. Composition according to Claim 8 or 9, **characterized in that** the solvent is chosen from phenoxyethanol, phenoxypropanol, 1,2-propylene glycol, 1-methoxy-2-propanol, diethylene glycol butyl ether and dipropylene glycol.

13. Composition according to one of Claims 1 to 9, **characterized in that** it comprises less than 50% by weight, preferably less than 35% by weight and in particular less than 25% by weight of solvent.

14. Composition according to one of Claims 1 to 10, **characterized in that** it additionally comprises one or more complexing agents.

15. Composition according to Claim 12, **characterized in that** the complexing agent is chosen from phosphates and polyphosphates, ethylenediaminetetraacetic acid, nitriloacetic acid, N,N-bis(2-hydroxyethyl)glycine, diethylenetriaminepentaacetic acid, hydroxyethanediphosphonic acid, gluconic acid, hydroxyethylethylenediaminetriacetic acid, polyoxycarboxylic acid, tris(aminomethyl)phosphonic acid, diethylenetriaminepentamethylenephosphonic acid, ethylenediaminetetramethylenephosphonic acid, ethylenediaminedisuccinic acid, ethylenediaminediglutaric acid, iminodisuccinic acid, polyaspartic acid and methylglycinediacetic acid and salts of said acids or mixtures of the complexing agents.

16. Composition according to one of Claims 1 to 13, **characterized in that** it additionally comprises one or more corrosion-protective agents.

17. Composition according to Claim 14, **characterized in that** the corrosion-protective agent is chosen from phosphonobutanetricarboxylic acid and its salts, derivatives of triazole, e.g. benzotriazole and methylbenzotriazole, 2,2'-[[(methyl-1H-benzotriazol-1-yl)methyl]imino]bisethanol, N,N-bis(2-ethylhexyl)-4-methyl-1H-benzotriazole-1-methylamine and carboxylic acid derivatives, e.g. 5(or 6)-carboxy-4-hexylcyclohex-2-en-1-octanoic acid.

18. Composition according to one of Claims 1 to 15, **characterized in that** it comprises further microbicidal active ingredients, in particular O-formals, additives and/or auxiliaries.

19. Composition according to one of Claims 1 to 16, **characterized in that** it is in liquid, liquid-viscous or paste form.

20. Composition according to one of Claims 1 to 17, **characterized in that** it is in the form of a concentrate.

21. Composition according to one of Claims 1 to 11, **characterized in that** it is in the form of a ready-to-use solution.

22. Use of a composition according to one of Claims 1 to 21 in industrial products, in particular crop-protection compositions, seed treatment compositions, industrial preservatives, in particular pack preservatives, cooling lubricant additives, fuel additives, disinfectants, in particular low-foam disinfectants, compositions for controlling cut wounds, parasites and plants, compositions for treating plant cut wounds, film preservatives for outside and, in particular, inside, disinfectants in areas where increased fungal attack is to be expected, and wood preservatives.

23. Use according to Claim 22, **characterized in that** the components of the composition according to one of Claims 1 to 19 are incorporated separately from one another, in particular temporally separately from one another, into the industrial products.

24. Use according to one of Claims 22 or 23, **characterized in that** the components of the composition according to one of Claims 1 to 19 are incorporated with the introduction of heat.

25. Process for the preparation of a composition according to one of Claims 1 to 21, **characterized in that** the components of the composition are added to one another with the introduction of heat.

26. Industrial product which comprises a composition according to one of Claims 1 to 21.

## Patentansprüche

1. Stabile mikrobizide Zusammensetzung, die
a) mindestens ein bakterizides N-Formal,
b) mindestens ein Fungizid, ausgewählt aus 2-Octyl-2H-isothiazolin-3-on, Benzisothiazolon und Mischungen von 5-Chlor-2-methyl-4-isothiazolin-3-on und 2-Methyl-4-isothiazolin-3-on, und
c) mindestens einen Stabilisator, ausgewählt aus 2-Mercaptopyridin-N-oxid, Alkali- oder Ammoniumsalzen von 2-Mercaptopyridin-N-oxid, Metallsalz-Komplexen von 2-Mercaptopyridin-N-oxid, 2,2'-Dithiobis(pyridin-N-oxid), 2-Mercaptobenzothiazol, 2-Thiocyanomethylthiobenzothiazol, NaBrO₃ sowie Mischungen derselben,
umfasst.

2. Zusammensetzung nach Anspruch 1, wobei der Stabilisator ausgewählt ist aus 2-Mercaptopyridin-N-oxid-Natriumsalz und 2-Mercaptopyridin-N-oxid-Zinksalz.

3. Zusammensetzung nach Anspruch 1 oder 2, **dadurch gekennzeichnet, dass** das bakterizide N-Formal ein Kondensationsprodukt aus Formaldehyd und Aminen, vorzugsweise Alkanolaminen, ist.

4. Zusammensetzung nach einem der Ansprüche 1 bis 3, **dadurch gekennzeichnet, dass** das bakterizide N-Formal ausgewählt ist aus 3,3'-Methylenbis-(5-methyloxazolidin) und 2,2',2''-(Hexahydro-1,3,5-triazin-1,3,5-triyl)triethanol.

5. Zusammensetzung nach einem der Ansprüche 1 bis 4, **dadurch gekennzeichnet, dass** das N-Formal in einer Konzentration von 1 bis 99 Gew.-%, bevorzugt von 10 bis 95 Gew.-%, bevorzugter 20 bis 90 Gew.-%, insbesondere 40 bis 90 Gew.-%, enthalten ist.

6. Zusammensetzung nach einem der Ansprüche 1 bis 5, **dadurch gekennzeichnet, dass** das Fungizid ein Isothiazolon-Derivat ist.

7. Zusammensetzung nach einem der Ansprüche 1 bis 6, **dadurch gekennzeichnet, dass** das Fungizid in einer Konzentration von 0,1 bis 99 Gew.-%, bevorzugt 2 bis 40 Gew.-%, insbesondere 5 bis 10 Gew.-%, enthalten ist.

8. Zusammensetzung nach einem der Ansprüche 1 bis 7, **dadurch gekennzeichnet, dass** der Stabilisator ebenfalls mikrobizid wirkt.

9. Zusammensetzung nach einem der Ansprüche 1 bis 8, **dadurch gekennzeichnet, dass** der Stabilisator in einer Konzentration von 0,1 bis 40 Gew.-%, bevorzugt 2 bis 20 Gew.-%, insbesondere 5 bis 10 Gew.-%, enthalten ist.

10. Zusammensetzung nach einem der Ansprüche 1 bis 9, **dadurch gekennzeichnet, dass** sie weiterhin Lösungsmittel und/oder Lösungsvermittler umfasst.

11. Zusammensetzung nach Anspruch 9, **dadurch gekennzeichnet, dass** das Lösungsmittel Alkohol, Ether, Glykol, Glykolmonoether, Glykoldiether, Polyol, Polyolmonoether, vollständig oder unvollständig verethertes Polyol und/oder Mischungen derselben umfasst.

12. Zusammensetzung nach Anspruch 8 oder 9, **dadurch gekennzeichnet, dass** das Lösungsmittel ausgewählt ist aus Phenoxyethanol, Phenoxypropanol, Propylenglykol-1,2, 1-Methoxypropanol-2, Butyldiglykol und Dipropylenglykol.

13. Zusammensetzung nach einem der Ansprüche 1 bis 9, **dadurch gekennzeichnet, dass** sie weniger als 50 Gew.-%, vorzugsweise weniger als 35 Gew.-% und insbesondere weniger als 25 Gew.-% Lösungsmittel enthält.

14. Zusammensetzung nach einem der Ansprüche 1 bis 10, **dadurch gekennzeichnet, dass** sie zusätzlich einen oder mehrere Komplexbildner enthält.

15. Zusammensetzung nach Anspruch 12, **dadurch gekennzeichnet, dass** der Komplexbildner ausgewählt ist aus Phosphaten und Polyphosphaten, Ethlyendiamintetraessigsäure, Nitriloessigsäure, N,N-Bis(2-hydroxyethyl)-glycin, Diethylentriaminpentaessigsäure, Hydroxyethandiphosphonsäure, Gluconsäure, Hydroxyethylethylendiamintriessigsäure, Polyoxycarbonsäure, Tris(aminomethyl)-phosphonsäure, Diethylentriaminpentamethylenphosphonsäure, Ethylendiamintetramethylenphosphonsäure, Ethylendiamindisuccinsäure, Ethylendiamindiglutarsäure, Iminodisuccinsäure, Polyasparginsäure und Methylglycindiessigsäure sowie Salzen der genannten Säuren oder Mischungen der Komplexbildner.

16. Zusammensetzung nach einem der Ansprüche 1 bis 13, **dadurch gekennzeichnet, dass** sie zusätzlich ein oder mehrere Korrosionsschutzmittel enthält.

17. Zusammensetzung nach Anspruch 14, **dadurch gekennzeichnet, dass** das Korrosionsschutzmittel ausgewählt ist aus Phosphonobutantricarbonsäure und ihren Salzen, Derivate des Triazols, z.B. Benzotriazol und Methylbenzotriazol, 2,2'-[[(Methyl-1H-benzotriazol-1-yl)methyl]imino]bisethanol, N,N-Bis(2-ethylhexyl)-4-methyl-1H-benzotriazol-1-methylamin und Carbonsäurederivaten, z.B. 5(oder 6)-Carboxy-4-hexylcyclohex-2-en-1-octansäure.

18. Zusammensetzung nach einem der Ansprüche 1 bis 15, **dadurch gekennzeichnet, dass** sie weitere mikrobizide Wirkstoffe, insbesondere O-Formale, Zusatzstoffe und/oder Hilfsstoffe enthält.

19. Zusammensetzung nach einem der Ansprüche 1 bis 16, **dadurch gekennzeichnet, dass** sie in flüssiger, flüssig-viskoser oder pastöser Form vorliegt.

20. Zusammensetzung nach einem der Ansprüche 1 bis 17, **dadurch gekennzeichnet, dass** sie als Konzentrat vorliegt.

21. Zusammensetzung nach einem der Ansprüche 1 bis 11, **dadurch gekennzeichnet, dass** sie in Form einer Gebrauchslösung vorliegt.

22. Verwendung einer Zusammensetzung gemäss einem der Ansprüche 1 bis 21 in technischen Produkten, insbesondere Pflanzenschutzmitteln, Mitteln zur Behandlung von Saatgut, technischen Konservierungsmitteln, insbesondere Gebindekonservierungsmitteln, Kühlschmierstoffadditiven, Brennstoffadditiven, Desinfektionsmitteln, insbesondere schaumarmen Desinfektionsmitteln, Mitteln zur Bekämpfung von Schnittwunden, Parasiten und Pflanzen, Mitteln zur Behandlung von Pflanzenschnittwunden, Filmkonservierungsmitteln für den Außen- und insbesondere den Innenbereich, Desinfektionsmitteln in Bereichen, in denen mit verstärktem Pilzbefall zu rechnen ist, und Holzschutzmitteln.

23. Verwendung nach Anspruch 22, **dadurch gekennzeichnet, dass** die Komponenten der Zusammensetzung gemäss einem der Ansprüche 1 bis 19 getrennt voneinander, insbesondere zeitlich getrennt voneinander, in die technischen Produkte eingearbeitet werden.

24. Verwendung nach einem der Ansprüche 22 oder 23, **dadurch gekennzeichnet, dass** die Komponenten der Zusammensetzung gemäss einem der Ansprüche 1 bis 19 unter Wärmezufuhr eingearbeitet werden.

25. Verfahren zur Herstellung einer Zusammensetzung nach einem der Ansprüche 1 bis 21, **dadurch gekennzeichnet, dass** die Komponenten der Zusammensetzung unter Wärmezufuhr zueinander zugegeben werden.

26. Technisches Produkt, das eine Zusammensetzung nach einem der Ansprüche 1 bis 21 umfasst.

## Revendications

1. Composition microbicide stable qui comprend
a) au moins un N-formal bactéricide,
b) au moins un fongicide choisi parmi la 2-octyl-2H-isothiazolin-3-one, la benzisothiazolone, ou des mélanges de la 5-chloro-2-méthyl-4-isothiazolin-3-one et de la 2-méthyl-4-isothiazolin-3-one et
c) au moins un stabilisant choisi parmi le N-oxyde de 2-mercaptopyridine, les sels de métaux alcalins ou d'ammonium de N-oxyde de 2-mercaptopyridine, les complexes de sels métalliques de N-oxyde de 2-mercaptopyridine, le 2,2'-dithiobis(N-oxyde de pyridine), le 2-mercaptobenzothiazole, le 2-thiocyanométhylthiobenzothiazole, NaBrO₃ et leurs mélanges.

2. Composition selon la revendication 1, dans laquelle le stabilisant est choisi parmi le sel de sodium de N-oxyde de 2-mercaptopyridine et le sel de zinc de N-oxyde de 2-mercaptopyridine.

3. Composition selon la revendication 1 ou 2, **caractérisée en ce que** le N-formal bactéricide est un produit de condensation de formaldéhyde et d'amines, de préférence d'alcanolamines.

4. Composition selon l'une des revendications 1 à 3, **caractérisée en ce que** the N-formal bactéricide est choisi parmi le 3,3'-méthylènebis(5-méthyloxazolidine) et le 2,2',2''-(hexahydro-1,3,5-triazine-1,3,5-triyl)triéthanol.

5. Composition selon l'une des revendications 1 à 4, **caractérisée en ce que** le N-formal est présent en concentration de 1 à 99% en poids, de préférence de 10 à 95% en poids, mieux encore de 20 à 90% en poids, en particulier de 40 à 90% en poids.

6. Composition selon l'une des revendications 1 à 5, **caractérisée en ce que** le fongicide est un dérivé d'isothiazolone.

7. Composition selon l'une des revendications 1 à 6, **caractérisée en ce que** le fongicide est présent en concentration de 0,1 à 99% en poids, de préférence de 2 à 40% en poids, en particulier de 5 à 10% en poids.

8. Composition selon l'une des revendications 1 à 7, **caractérisée en ce que** le stabilisant a aussi une action microbicide.

9. Composition selon l'une des revendications 1 à 8, **caractérisée en ce que** le stabilisant est présent en concentration de 0,1 à 40% en poids, de préférence de 2 à 20% en poids, en particulier de 5 à 10% en poids.

10. Composition selon l'une des revendications 1 à 9, **caractérisée en ce qu'**elle comprend en outre des solvants et/ou des agents favorisant la solubilité.

11. Composition selon la revendication 9, **caractérisée en ce que** le solvant comprend un alcool, un éther, un glycol, un monoéther de glycol, un diéther de glycol, un polyol, un monoéther de polyol, un polyol complètement ou incomplètement éthérifié et/ou leurs mélanges.

12. Composition selon la revendication 8 ou 9, **caractérisée en ce que** le solvant est choisi parmi le phénoxyéthanol, le phénoxypropanol, le 1,2-propylèneglycol, le 1-méthoxy-2-propanol, l'éther butylique de diéthylèneglycol et le dipropylèneglycol.

13. Composition selon l'une des revendications 1 à 9, **caractérisée en ce qu'**elle comprend moins de 50% en poids, de préférence moins de 35% en poids et en particulier moins de 25% en poids de solvant.

14. Composition selon l'une des revendications 1 à 10, **caractérisée en ce qu'**elle comprend en outre un ou plusieurs agents complexants.

15. Composition selon la revendication 12, **caractérisée en ce que** l'agent complexant est choisi parmi les phosphates et les polyphosphates, l'acide éthylènediaminetétraacétique, l'acide nitriloacétique, la N,N-bis(2-hydroxyéthyl)-glycine, l'acide diéthylènetriaminepentaacétique, l'acide hydroxyéthanediphosphonique, l'acide gluconique, l'acide hydroxyéthyléthylènediaminetriacétique, un acide polyoxycarboxylique, l'acide tris(aminométhyl)phosphonique, l'acide diéthylènetriaminepentaméthylènephosphonique, l'acide éthylènediaminetétraméthylènephosphonique, l'acide éthylènediaminedisuccinique, l'acide éthylènediaminediglutarique, l'acide iminodisuccinique, un acide polyaspartique et l'acide méthylglycinediacétique, et les sels desdits acides, ou des mélanges des agents complexants.

16. Composition selon l'une des revendications 1 à 13, **caractérisée en ce qu'**elle comprend en plus un ou plusieurs agents anti-corrosion.

17. Composition selon la revendication 14, **caractérisée en ce que** l'agent anti-corrosion est choisi parmi l'acide phosphonobutanetricarboxylique et ses sels, les dérivés du triazole, par exemple le benzotriazole et le méthylberizotriazole, le 2,2'-[[(méthyl-1H-benzotriazol-1-yl)méthyl]imino]biséthanol, la N,N-bis(2-éthylhexyl)-4-méthyl-1H-benzotriazole-1-méthylamine et les dérivés d'acide carboxylique, par exemple l'acide 5(ou 6)-carboxy-4-hexylcyclohex-2-ène-1-octanoïque.

18. Composition selon l'une des revendications 1 à 15, **caractérisée en ce qu'**elle comprend d'autres ingrédients ayant une activité microbicide, en particulier des O-formals, des additifs et/ou des auxiliaires.

19. Composition selon l'une des revendications 1 à 16, **caractérisée en ce qu'**elle est sous forme de liquide, de liquide visqueux ou de pâte.

20. Composition selon l'une des revendications 1 à 17, **caractérisée en ce qu'**elle est sous forme de concentré.

21. Composition selon l'une des revendications 1 à 11, **caractérisée en ce qu'**elle est sous forme de solution prête à l'emploi.

22. Utilisation d'une composition selon l'une des revendications 1 à 21 dans des produits industriels, en particulier des compositions phytoprotectrices, des compositions de traitement des semences, des conservateurs industriels, en particulier des conservateurs d'emballage, des additifs pour lubrifiants de refroidissement, des additifs pour carburants, des désinfectants, en particulier des désinfectants à faible pouvoir moussant, des compositions pour juguler les plaies par coupure, les parasites et les végétaux, des compositions pour traiter les plaies par coupure des végétaux, conservateurs en film pour désinfectants extérieurs et, en particulier, intérieurs, dans les zones où une attaque fongique accrue est à prévoir, et conservateurs pour le bois.

23. Utilisation selon la revendication 22, **caractérisée en ce que** les constituants de la composition selon l'une des revendications 1 à 19 sont incorporés séparément les uns des autres, en particulier séparément les uns des autres dans le temps, dans les produits industriels.

24. Utilisation selon l'une des revendications 22 ou 23, **caractérisée en ce que** les constituants de la composition selon l'une des revendications 1 à 19 sont incorporés avec apport de chaleur.

25. Procédé de préparation d'une composition selon l'une des revendications 1 à 21, **caractérisé en ce que** les constituants de la composition sont ajoutés les uns aux autres avec apport de chaleur.

26. Produit industriel qui comprend une composition selon l'une des revendications 1 à 21.
